# EUROPÄISCHE PATENTSCHRIFT

(11) **EP 0 348 617 B1**
(45) Veröffentlichungstag und Bekanntmachung des Hinweises auf die Patenterteilung: **11.08.1993**
(21) Anmeldenummer: 89106965.0
(22) Anmeldetag: 19.04.1989
(51) Int. Cl.: B60R 25/10

(54) **Vorrichtung zur optischen Anzeige der Bereitschaft einer Fahrzeug-Alarmanlage**
Optical indication device for the armed condition of an automobile alarm arrangement
Dispositif d'indication optique de l'état d'en veille d'un arrangement d'alarme pour véhicules automobiles

(30) Priorität: 25.06.1988 DE 3821561
(43) Veröffentlichungstag der Anmeldung: 03.01.1990
(73) Patentinhaber: Dr.Ing.h.c. F. Porsche Aktiengesellschaft, 70435 Stuttgart (DE)
(72) Erfinder: Weiner, Hans, D-7130 Mühlacker (DE)

(56) Entgegenhaltungen:
- WO-A-82/02861
- DE-A- 2 848 533
- DE-A- 3 607 784
- DE-U- 8 714 628
- DE-U- 8 716 500
- US-A- 2 709 745
- US-A- 4 104 981
- US-A- 4 337 454
- ELECTRONICS AUSTRALIA, Band 37, Nr. 4, Juli 1975, Seiten 52, 53, Sydney, Australien; D. EDWARDS: "LED flasher based on inexpensive IC"

## Beschreibung

Die Erfindung betrifft eine Vorrichtung nach der Gattung des Hauptanspruchs.

Beim Verlassen des Fahrzeugs kann ein Fahrer oft nicht erkennen, ob er ein Diebstahl-Alarmanlage alarmbereit geschaltet hat; dies gilt insbesondere bei Dunkelheit, wo selbst der Zustand einer Verriegelung einer Türschließanlage nicht ohne zusätzlichen Griff zum Türöffner geprüft werden kann.

Aus diesem Grund wurde bereits eine von der Fahrzeugaußenseite einsehbare Leuchtdiode in der Nähe eines auf der Innenseite der Tür angeordneten Verriegelungsknopfs der Schließanlage eines bekannten Kraftfahrzeugs eingebaut (siehe Betriebsanleitung des Fahrzeugs Citroen CX Diesel - Baujahr 83, Seite 2).

Ebenso ist es aus Funkschau 4, 1985, Seiten 70 bis 73 bekannt, den Zustand einer alarmbereit geschalteten Fahrzeug-Alarmanlage durch eine blinkende Leuchtdiode zu kennzeichnen.

Diese Leuchtdioden benötigen jedoch immer einen separaten Einbauraum an der Oberseite des Türinnenblatts. Ebenso sind besondere Halte- oder Befestigungselemente für die Leuchtdiode vorzusehen, die die unvermeidlichen Toleranzen zwischen dem Türinnenblatt und dessen Verkleidung auszugleichen vermögen. Bei der Fahrzeug-Alaramanlage nach dem Funkschau-Artikel tritt zudem das Problem eines relativ hohen Stromverbrauchs der Leuchtdiode durch diese selbst und den notwendigen Vorwiderstand auf.

Mit der DE-U-87 14 628 ist eine Türsicherungsanlage für Fahrzeugtüren bekannt geworden, bei der Leuchtdioden in die Türverriegelungsknöpfe eingesetzt sind.

Jedoch ist zur Stromversorgung der Leuchtdioden in den beweglichen Türverriegelungsknöpfen ein elektrisches Leitungspaar zu einer vorgeschalteten Elektronik im Fahrzeug notwendig. Das Leitungspaar ist wegen der Bewegung der Türverriegelungsknöpfe bruchgefährdet und erfordert bei der Montage bzw. bei der Reparatur eines defekten Türverriegelungsknopfs zumindest einen teilweisen Ausbau von Türververkleidungsteilen.

Es ist darüber hinaus aus der US-A-4 104 981 bekannt geworden, eine Anzeigevorrichtung zweiteilig auszuführen, wobei die beiden Teile zueinander beweglich angeordnet sind. Der erste Teil enthält eine Lichtquelle. Der zweite Teil weist eine Oberfläche zur Anzeige eines empfangenen Lichtstrahles auf. In einer ersten Lage der Beiden Teile zueinander gelangt ein Lichtstrahl von dem ersten Teil auf das zweite Teil und wird auf der Anzeigeoberfläche sichtbar. In einer zweiten Lage gibt es keine optische Verbindung zwischen dem ersten und dem zweiten Teil.

Es ist deshalb Aufgabe der Erfindung ausgehend von der DE-U-8714628, eine Vorrichtung zur Anzeige der Bereitshaft einer Fahrzeugalarmaniage oder des verriegeiten Zustandes einer Fahrzeugtür zu schaffen, die in einem sinnvollen Zusammenhang mit der Schließanlage des Fahrzeuges steht und sowohl bezüglich der Betriebssicherheit als auch der Reparaturfreundlichkeit verbessert ist.

Die Aufgabe ist durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß die Vorrichtung weitgehend in ein ohnehin bereits vorhandenes Element (Verriegelungsknopf) einer Fahrzeugtür integriert werden kann und damit keinen zusätzlichen Einbauraum an einem Türinnenblatt benötigt. Der Einbauort steht in einem sinnvollen Zusammenhang mit einer Schließanlage des Kraftfahrzeugs. Durch einen Impulsbetrieb des Anzeigeelements mit einer im Verhältnis zum Blinkimpuls relativ langen Impulspause wird einerseits ein geringer Energieverbrauch erzielt, andererseits kann auf einen Vorwiderstand verzichtet werden.

Die Erfindung wird anhand von in den Zeichnungen dargestellten Beispielen nachstehend näher erläutert.

Es zeigt
- Fig. 1: einen Verriegelungsknopf mit einer Leuchtdiode einer Fahrzeugschließanlage mit einem über elektrische Leitungsdrähte angeschlossenen Energieversorgungsteil nach dem Stand der Technik,
- Fig. 2: eine Vorrichtung nach Fig. 1, jedoch in der Draufsicht, ebenfalls nach dem Stand der Technik
- Fig. 3: ein elektrisches Schaltbild der Anordnung nach Fig. 1,
- Fig. 4: ein Impulsdiagramm des Ausgangssignals des Energieversorgungsteils,
- Fig. 5: einen Verriegelungsknopf nach Fig. 1, jedoch mit drahtloser Energieversorgung,
- Fig. 6: einen Spulenträger mit einem Energieversorgungsteil zur drahtlosen Energieversorgung der Leuchtdiode des Verriegelungsknopfs,
- Fig. 7: einen Spulenträger nach Fig. 6, jedoch in der Draufsicht,
- Fig. 8: ein Schnittbild in Richtung B-B durch den Spulenträger,
- Fig. 9: ein Schaltbild nach Fig. 4, jedoch mit drahtloser Energieversorgung,
- Fig. 10: ein Schnittbild des Verriegelungsknopfs nach Fig. 5 in verriegelter Stellung und des Spulenträgers nach Fig. 6, eingebaut in ein Türinnenblatt,
- Fig. 11: ein Schnittbild nach Fig. 10, jedoch in verriegelter Stellung,
- Fig. 12: ein Schnittbild nach Fig. 10, jedoch für eine Vorrichtung in geänderter Ausführung.

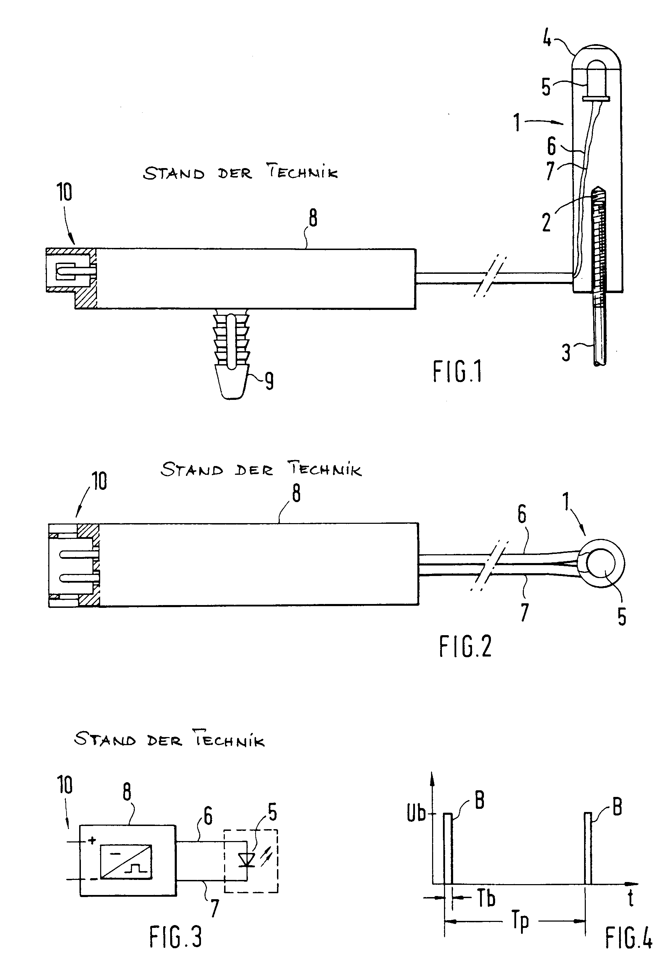

In Fig. 1 ist mit 1 ein Verriegelungsknopf gezeigt. Der Verriegelungsknopf 1 weist in bekannter Weise an seinem einen unteren Ende eine Gewindebohrung 2 auf, mit welcher er auf eine Verriegelungsstange 3 einer nicht gezeigten Schließanlage eines Fahrzeugs aufgeschraubt ist. Auf dem Ende des Verriegelungsknopfs, welches dem mit der Gewindebohrung 2 versehenen Ende abgewandt ist, ist der Verriegelungsknopf 1 wenigstens bereichsweise aus durchscheinendem Material 4 hergestellt, welches von einem im Verriegelungsknopf 1 angeordneten bzw. eingegossenen elektrooptischen Wandler 5, beispielsweise einer Leuchtdiode (LED) beleuchtet werden kann.

Die LED 5 ist schließlich über ein elektrisches Leitungspaar 6, 7, welches am unteren Ende aus dem Verriegelungsknopf 1 herausgeführt ist, mit einem Energieversorgungsteil 8 verbunden. Dieses Energieversorgungsteil 8 kann beispielsweise über einen Befestigungsbolzen 9, welcher am Gehäuse angegossen sein kann, in einer entsprechenden Montageöffnung innerhalb der Fahrzeugtür festgelegt sein (nicht gezeigt). Das Energieversorgungsteil 8 weist schließlich noch einen elektrischen Steckanschluß 10 auf, mittels dem das Energieversorgungsteil 8 über einen (nicht gezeigten) Schaltkontakt der Schließanlage oder einer Alarmanlage an ein Fahrzeugbordnetz angeschlossen werden kann; der Schaltkontakt ist hierbei bei verriegelter Schließanlage oder alarmbereit geschalteter Alarmanlage geschlossen, so daß das Energieversorgungsteil 8 mit Betriebsstrom versorgt wird.

Fig. 2 zeigt die gesamte Vorrichtung in einer Ansicht von oben.

In Fig. 3 schließlich ist ein Prinzipschaltbild der Vorrichtung dargestellt. Das Energieversorgungsteil 8 besteht im wesentlichen aus einem - an sich bekannten - Impulsgenerator, welcher eine an seinen Eingängen 10 anliegende Gleichspannung (Bordnetzspannung Ub) in ein Rechteckimpulssignal definierter Impulsbreite Tb (Blinkimpulse B) und Impulspausen Tp umsetzt. Hierzu kann beispielsweise ein astabiler Multivibrator geringer Stromaufnahme eingesetzt werden.

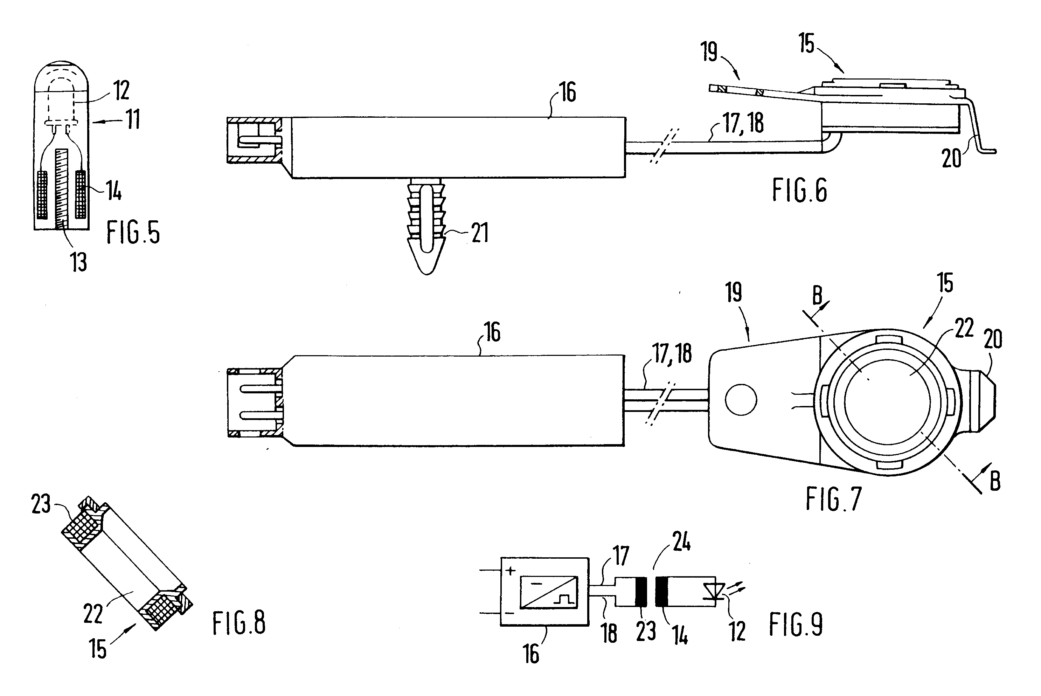

Ein diesbezügliches Impulsdiagramm ist in Fig. 4 gezeigt. Die Impulsbreite der Blinkimpulse B ist hierbei in ihrer zeitlicher Dauer Tb so gewählt, daß sie der Leistungsaufnahme der LED angepaßt ist, d.h., daß beispielsweise auf einen Vorwiderstand verzichtet werden kann; es entsteht somit keine zusätzliche Verlustleistung an einem derartigen Anpassungselement.

Impulsbreiten Tb und Impulspausen Tp werden jedoch so ausgelegt, daß die Blinkimpulse gut sichtbar sind und eine ausreichende Wiederholfrequenz aufweisen. Typische Werte sind beispielsweise 55 msec für die Impulsbreite Tb der Blinkimpulse B und 1,5 sec für die Impulspause Tp. Der Blinkimpuls B kann selbstverständlich auch selbst in mehrere Ein- und Ausschaltimpulse aufgelöst sein.

In Fig. 5 ist ein Verriegelungsknopf 11 für drahtlose Energieversorgung der im Verriegelungsknopf 11 angeordneten LED 12 abgebildet. Hierzu ist im Bereich einer Gewindebohrung 13 zum Aufschrauben des Verriegelungsknopfs 11 auf eine nicht gezeigte Verriegelungsstange am unteren Ende des Verriegelungsknopfs 11 eine Spule (Sekundärspule 14) angeordnet (bzw. im Verriegelungsknopf 11 eingegossen), an welche die LED 12 elektrisch angeschlossen ist.

Fig. 6 schließlich zeigt einen Spulenträger 15 mit einem Energieversorgungsteil 16, das im wesentlichen mit dem Energieversorgungsteil 8 nach Fig. 1 identisch ist; die Teile sind in dieser Fig. im Seitenriß und in Fig. 7 im Aufriß gezeigt. Spulenträger 15 und Energieversorgungsteil 16 sind über ein Leitungspaar 17, 18 miteinander verbunden. Der Spulenträger ist mittels einer Öse 19 und eines Abstützelements 20 innerhalb der Fahrzeugtür festlegbar, das Energieversorgungsteil 16 mittels eines Befestigungsbolzens 21. Der Spulenträger weist eine zentrale Bohrung 22 auf, in welcher der Verriegelungsknopf 11 in axialer Richtung geführt ist.

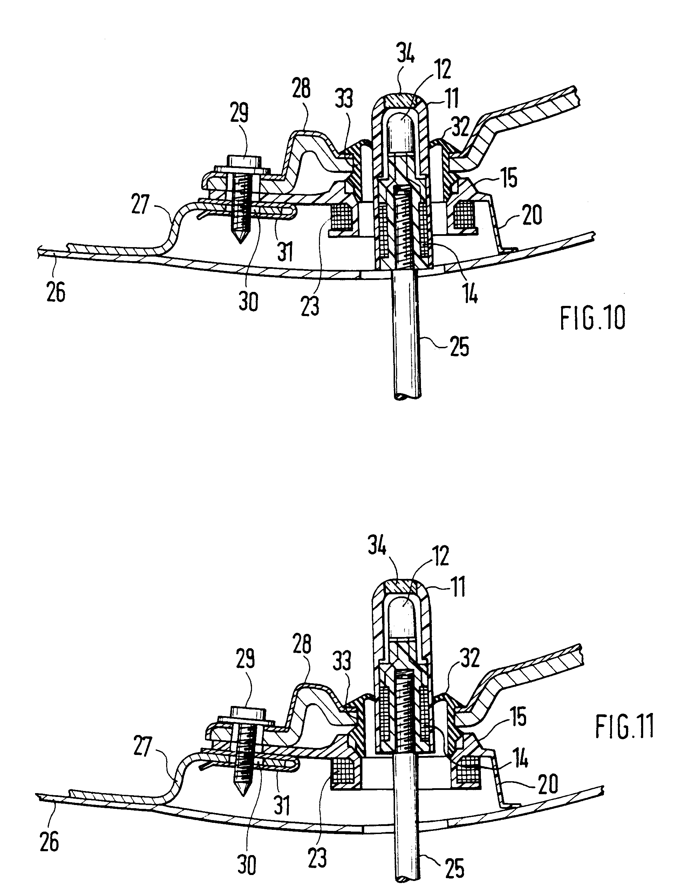

Fig. 8 zeigt einen Schnitt durch den Spulenträger 15 in Richtung B-B mit der Öffnung 22 und einer an das Leitungspaar 17, 18 angeschlossenen, der Energieversorgung der LED 12 im Verriegelungsknopf 11 dienenden eingegossenen Primärspule 23.

Das elektrische Prinzipschaltbild der Vorrichtung nach den Fig. 5 bis 8 zeigt wiederum Fig. 9. In einer bestimmten, in der nachfolgenden Fig. 10 gezeigten Stellung des Verriegelungsknopfs 11 relativ zum Spulenträger 15 liegen die Spulen 14 und 23 konzentrisch zueinander, so daß eine durch das Transformatorsymbol 24 gezeigte transformatorische Wirkverbindung (induktive Kopplung) zwischen Primärspule 23 und Sekundärspule 14 besteht. Die vom astabilen Multivibrator (nicht gezeigt) des Energieversorgungsteils 16 entsprechend Fig. 4 erzeugten Impulse werden dann von der Primärspule 23 auf die Sekundärspule 14 übertragen und erregen die LED 12 zum Leuchten.

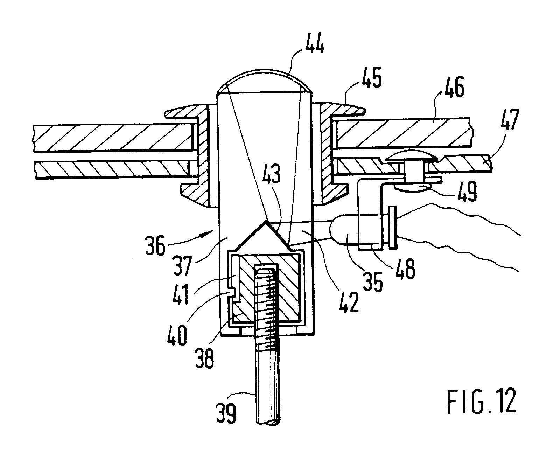

Die Fig. 10 und 11 schließlich zeigen ein Schnittbild eines auf die Verriegelungsstange 25 einer nicht gezeigten Schließenlage aufgeschraubten Verriegelungsknopfs 11 und des Spulenträgers 15 im eingebauten Zustand. Mit 26 ist ein Teil eines Türinnenblatts (Türinnenblechs) bezeichnet, an dem ein Haltewinkel 27 befestigt (angeschweißt) ist. Spulenträger 15 und ein Verkleidungsteil 28 sind mittels einer Schraube 29 und einer über eine Bohrung 30 im Haltewinkel 27 gesteckte Blechmutter 31 mit letzterem verschraubt. Der Spulenträger stützt sich über das Abstützelement 20 gegen das Türinnenblatt 26 ab. Der Verriegelungsknopf 11 wird schließlich durch eine elastische Manschette 32 geführt und gegenüber dem Spulenträger und einer Öffnung im Verkleidungsteil 33 in Lage gehalten. Die Manschette 32 ermöglicht hierbei einen Ausgleich fertigungs- und montagetechnischer Toleranzen, insbesondere zwischen Türinnenblatt 26 und Verkleidungsteil 28.

In dem in Fig. 10 gezeigten, eingezogenen Zustand des Verriegelungsknopfes 11, welcher den veriegelten Zustand der Schließanlage der Fahrzeugtür zeigt, liegen die Spulen 23 und 14 zueinander konzentrisch, so daß eine gute induktive Kopplung zwischen den Spulen 23 und 14 besteht und somit Energie transformatorisch von der Primärspule 23 zur Sekundärspule 14 übertragen und die Leuchtdiode 12 zur Abgabe von Licht erregt werden kann. So ist bei Tag wie auch bei Nacht kontrollierbar, daß die Fahrzeugtüre ordentlich verriegelt bzw. die Alarmanlage alarmbereit gechaltet ist.

Ist die Fahrzeugtür dagegen unverriegelt, so steht der Verriegelungsknopf 11 in der Fig. 11 gezeigten Weise deutlich sichtbar gegenüber dem Verkleidungsteil 28 ab. Es ist zu erkennen, daß das Spulenpaar dann merklich versetzt zueinander steht: damit ist eine induktive Kopplung zwischen der Primärspule 23 und der Sekundärspule 14 nicht mehr gegeben (oder sie ist so schwach, daß sie nicht mehr für eine Ansteuerung der LED ausreicht). Dies hat den Vorteil, daß selbst bei einer Fehlfunktion in der Schließ- oder Alarmanlage (z.B. Ansteuerung des Energieversorgungsteils 16) bei unverriegelter Tür eine optische Rückmeldung nicht erfolgen kann.

Alternativ zu den Ausführungen der Verriegelungsknöpfe nach den Fig. 1 und 4 kann in der in den Fig. 10 und 11 gezeigten Weise auch lediglich ein scheibenförmiges, einen Lichtdurchtritt von der LED 12 ermöglichendes Teil 34 aus transparentem Kunststoff in den Verriegelungsknopf 11 eingesetzt sein, während der übrige Teil des Verriegelungsknopfs aus nichtdurchscheinendem Material hergestellt ist.

Eine weitere Ausführungsvariante für die Signalgabe eines elektrooptischen Wandlers (LED 35) über einen Verriegelungsknopf 36 ist in Fig. 12 gezeigt. Der Verriegelungsknopf 36 ist zweiteilig und besteht aus einem transparenten Teil 37 und einem Gewindeteil 38, das auf eine Verriegelungsstange 39 einer (nicht gezeigten) Schließanlage aufgeschraubt ist. Das transparente Teil 37 ist mit dem Gewindeteil 38 verklipst und mittels einer Nase 40, welche in eine entsprechende Vertiefung 41 im Gewindeteil 38 eingreift, gegen Verdrehen gesichert.

Das transparente Teil 37 ist oberhalb des Aufnahmeraums für den Gewindeteil 38 kegelförmig (oder auch kugelförmig) hohlgebohrt und vorzugsweise verspiegelt. Ebenso kann dort auch ein Prisma eingesetzt sein. Hierdurch wird erreicht, daß in gezeigten, eingezogenen Zustand des Verriegelungsknopfes 36 die von der LED 35 ausgehende Lichtstrahlung 42 an der kegelförmigen Oberfläche 43 nach oben umgelenkt wird und an der geriffelten oder aufgerauhten Oberfläche 44 des Verriegelungsknopfs 36 sichtbar wird.

Der Verriegelungsknopf 36 wird schließlich noch durch eine Rosette 45 gegenüber einem Verkleidungsteil 46 und einem Türinnenblatt 47 (Türinnenblech) in Lage gehalten. Die LED 35 kann beispielsweise mittels eines einfachen Halters 48, welcher die LED 35 wenigstens teilweise umschließt, am Türinnenblatt 47 befestigt sein (z. B. mittels eines Niets 49). Die LED kann, ebenso wie der in den Fig. 1 bis 4 gezeigten Weise, mittels eines entsprechenden Energieversorgungsteils mit Strom versorgt werden.

Eine Signalgabe kann nur in der gezeigten Stellung des Verriegelungsknopfs 36 erfolgen: Steht der Verriegelungsknopf 36 dagegen teilweise gegenüber dem Verkleidungsteil 46 ab (Unterkante Verriegelungsknopf 36 in Höhe der Unterkante der Rosette 45, unverriegelte Tür), so ist der Lichtweg zwischen der LED 35 und der geriffelten Oberfläche 44 unterbrochen.

## Patentansprüche

1. Vorrichtung zur optischen Anzeige der Bereitschaft einer Fahrzeug- Alarmanlage oder des verriegelten Zustands einer Fahrzeugtür, wobei ein im Bereich einer Schließanlage des Fahrzeugs angeordnetes oder in einen Verriegelungsknopf (1, 11) der Schließanlage eingesetztes elektrooptisches Anzeigeelement (5, 12), durch wenigstens einen bei alarmbereit geschalteter Alarmanlage oder verriegelter Fahrzeugtür betätigten Schaltkontakt angesteuert wird, **dadurch gekennzeichnet**, daß die Energieversorgung des in dem Verriegelungsknopf (1, 11) der Schließanlage eingesetzten elektrooptischen Anzeigeelements (5, 12) drahtlos über ein Spulenpaar (23, 14) erfolgt, wobei eine erste Spule (23) des Spulenpaars (23, 14) in einem in ein Türinnenblatt (26) oder ein Verkleidungsteil (28) des Türinnenblatts (26) der Fahrzeugtür eingesetzten oder an dem Türinnenblatt (26) oder dem Verkleidungsteil (28) befestigten wenigstens bereichsweise ringförmigen Spulenträger (15) angeordnet ist und eine zweite Spule (14) des Spulenpaars (23, 14) im Verriegelungsknopf (11) derart eingesetzt ist, daß beide Spulen (23, 14) bei verriegelter Schließanlage näherungsweise konzentrisch zueinander liegen.

2. Vorrichtung nach Anspruch 1, **dadurch gekennzeichnet**, daß das elektrooptische Anzeigeelement (5, 12) in einem Blinkmode mit einer im Verhältnis zur Impulsbreite (Tb) eines Blinkimpulses (B) relativ langen Impulspause (Tp) betrieben wird.

3. Vorrichtung nach wenigstens einem der vorangehenden Ansprüche, **dadurch gekennzeichnet**, daß die Energieversorgung durch ein getaktetes Gleichspannungssignal erfolgt.

4. Vorrichtung nach wenigstens einem der vorangehenden Ansprüche, **dadurch gekennzeichnet**, daß das getaktete Gleichspannungssignal beziehungsweise ein Blinksignal mittels eines Energieversorgungsteils (8, 16) erzeugt wird, wobei das getaktete Gleichspannungssignal beziehungsweise das Blinksignal dem elektrooptischen Anzeigeelement (5, 12) bei betätigtem Schaltelement induktiv über das Spulenpaar (23,14) zugeführt wird.

5. Vorrichtung nach Anspruch 4, **dadurch gekennzeichnet**, daß eine Taktung des Gleichspannungssignals bzw. Blinksignals der Leistungsaufnahme einer als elektrooptisches Anzeigeelement dienenden Leuchtdiode (5,12) angepaßt ist.

6. Vorrichtung nach wenigstens einem der vorangehenden Ansprüche, **dadurch gekennzeichnet**, daß der Spulenträger (15) bzw. die Elektronikeinheit (16) durch eine Klips-, Rast-, Schraub-, Steck- oder Klebverbindung mit der Fahrzeugtür befestigt ist.

7. Vorrichtung zur optischen Anzeige der Bereitschaft einer Fahrzeug-Alarmanlage oder des verriegelten Zustands einer Fahrzeugtür, wobei ein im Bereich einer Schließanlage des Fahrzeugs angeordnetes oder in einem Verriegelungsknopf der Schließanlage eingesetztes elektrooptisches Anzeigeelement (35) durch wenigstens einen bei alarmbereit geschalteter Alarmanlage oder verriegeiter Fahrzeugtür betätigten Schaltkontakt angesteuert wird, **dadurch gekennzeichnet**, daß eine Signalgabe des elektrooptischen Anzeigeelements (35) über einen wenigstens bereichsweise aus durchscheinendem Material bestehenden Verriegelungsknopf (36) der Schließanlage erfolgt, wobei bei verriegelter Fahrzeugtür bzw. bei versenktem Verriegelungsknopf (36) dieser von dem im Hohlraum der Fahrzeugtür angeordneten elektrooptischen Anzeigeelement (35) in radialer Richtung mit Lichtstrahlung beaufschlagt wird, welche im Verriegelungsknopf (36) in axialer, zur Verriegelungsknopfoberseite zeigender Richtung umgelenkt wird, wobei der Verriegelungsknopf (35) zweiteilig ausgeführt ist und einen transparenten Teil (37) und einen Gewindeteil (38) aufweist, welche miteinander verklipst und mittels einer mit einer entsprechenden Vertiefung (41) im Gewindeteil korrespondierenden, an den transparenten Teil (37) angeformten Nase (40) gegen Verdrehen gesichert sind.

8. Vorrichtung nach Anspruch 7, **dadurch gekennzeichnet**, daß die Umlenkung der Lichtstrahlung mittels eines im Verriegelungsknopf eingesetzten Prismas erfolgt.

9. Vorrichtung nach Anspruch 7, **dadurch gekennzeichnet**, daß zur Umlenkung des Lichtstrahls der aus transparentem Material bestehende Teil (37) des Verriegelungsknopfes an seinem der Verriegelungsknopfoberseite gegenüberliegenden Ende kegelförmig hohlgebohrt ist.

10. Vorrichtung nach Anspruch 9, **dadurch gekennzeichnet**, daß die kegelförmige Oberfläche (43) verspiegelt ist.

## Claims

1. A device for optically displaying the armed condition of an automobile alarm arrangement or the locked condition of an automobile door, an electro-optical display element (5, 12) arranged in the region of a locking device of the automobile or in a locking button (1, 11) of the locking device being controlled by at least one switching contact, which is actuated when the alarm arrangement is armed or when the automobile door is locked, characterised in that the energy supply of the electro-optical display element (5, 12) arranged in the locking button (1, 11) of the locking device is effected in a wire-free manner in a pair of coils (23, 14), a first coil (23) of the coil pair (23, 14) being arranged in an at least partially annular coil support (15) arranged in an internal door panel (26) or a lining part (28) of the internal door panel (26) of the automobile door or secured to the internal door panel (26) or lining part (28), and a second coil (14) of the coil pair (23, 14) being arranged in the locking button (11) in such a manner that both coils (23, 14) are arranged approximately concentric to one another when the locking device is locked.

2. A device according to claim 1, characterised in that the electro-optical display element (5, 12) is operated in the manner of a blinker with a relatively long pulse pause (Tp) in relation to the pulse width (Tb) of a blinker pulse (B).

3. A device according to at least one of the preceding claims, characterised in that the energy supply is effected by a pulsed direct current voltage signal.

4. A device according to at least one of the preceding claims, characterised in that the pulsed direct current voltage signal or a blinker signal is generated by means of an energy supply element (8, 16), the pulsed direct current voltage signal or the blinker signal being inductively supplied via the coil pair (23, 14) to the electro-optical display element (5, 12) when the switching element is actuated.

5. A device according to claim 4, characterised in that a pulsing of the direct current voltage signal or blinker signal is adapted to the power input of a light diode (5, 12) acting as an electro-optical display element.

6. A device according to at least one of the preceding claims, characterised in that the coil support (15) or the electronic unit (16) is secured to the automobile door by means of a clip-, locking-screw-, plug- or adhesive connection.

7. A device for optically displaying the armed condition of an automobile alarm arrangement or the locked condition of an automobile door, an electro-optical display element (5, 12) arranged in the region of a locking device of the automobile or in a locking button of the locking device being controlled by at least one switching contact, which is actuated when the alarm arrangement is armed or when the automobile door is locked, characterised in that a signal transmission of the electro-optical display element (35) is effected via a locking button (36) of the locking device, which locking button is at least partially made of transparent material and is acted upon by a ray of light in a radial direction by the electro-optical display element (35) arranged in the cavity of the automobile door when the vehicle door is locked or when the locking button (36) is lowered, the ray of light being deflected in the locking button (36) in an axial direction towards the upper side of the locking button, the latter being constructed in two parts and comprising a transparent part (37) and a threaded part (38), which are clipped together and secured against rotation by means of a projection (40) formed onto the transparent part (37) and corresponding to an associated recess (41) in the threaded part.

8. A device according to claim 7, characterised in that the deflection of the ray of light is effected by means of a prism arranged in the locking button.

9. A device according to claim 7, characterised in that, for the deflection of the ray of light, the part (37) of the locking button made of transparent material comprises a hollow conical bore at its end opposite the upper side of the locking button.

10. A device according to claim 9, characterised in that the conical surface (43) is mirrored.

## Revendications

1. Dispositif pour l'indication optique de l'état de veille d'un système d'alarme d'un véhicule automobile ou de l'état verrouillé d'une porte de véhicule, dans lequel un élément d'indication (5, 12) opto-électronique, placé dans la zone d'une installation de fermeture du véhicule ou dans un bouton de verrouillage (1, 11) de l'installation de fermeture, est commandé par au moins un contact de commutation, actionné lorsque le système d'alarme est prêt à fonctionner ou lorsque la porte du véhicule est verrouillée, caractérisé en ce que l'alimentation en énergie de l'élément d'indication (5, 12) opto-électronique, inséré dans le bouton de verrouillage (1, 11) de l'installation de fermeture, s'effectue sans fil par une paire de bobines (23, 14), une première bobine (23) de la paire (23, 14) étant placée dans un porte-bobines (15), au moins en partie annulaire, monté dans un panneau intérieur de portière (26) ou un élément de revêtement (28) du panneau intérieur (26) de la portière du véhicule ou fixé sur le panneau intérieur de portière (26) ou sur l'élément de revêtement (28) et une deuxième bobine (14) de la paire (23, 14) est insérée dans le bouton de verrouillage (11) de manière que les deux bobines (23, 14) soient approximativement concentriques lorsque l'installation de fermeture est verrouillée.

2. Dispositif selon la revendication 1, caractérisé en ce que l'élément d'indication (5, 12) opto-électronique clignote avec une pause d'impulsion (Tp) relativement longue par rapport à la largeur d'impulsion (Tb) d'une impulsion de clignotement (B).

3. Dispositif selon l'une au moins des revendications précédentes, caractérisé en ce que l'alimentation en énergie s'effectue au moyen d'un signal à tension continue rythmé.

4. Dispositif selon l'une au moins des revendications précédentes, caractérisé en ce que le signal à tension continue rythmé ou un signal clignotant est produit au moyen d'un élément d'alimentation en énergie (8, 16), le signal à tension continue rythmé ou le signal clignotant étant envoyé à l'élément d'indication (5, 12) opto-électronique de manière inductive, par la paire de bobines (23, 14), lorsque l'élément de commutation est actionné.

5. Dispositif selon la revendication 4, caractérisé en ce que le rythme du signal à tension continue ou du signal clignotant est adapté à la puissance absorbée par une diode électroluminescente (5, 12), servant d'élément d'indication opto-électronique.

6. Dispositif selon l'une au moins des revendications précédentes, caractérisé en ce que le porte-bobines (15) ou l'unité électronique (16) est fixé par un assemblage clipsé, encliqueté, vissé, emboîté ou collé avec la portière de véhicule.

7. Dispositif pour l'indication optique de l'état de veille d'un système d'alarme d'un véhicule automobile ou de l'état verrouillé d'une porte de véhicule, dans lequel un élément d'indication (35) opto-électronique, placé dans la zone d'une installation de fermeture du véhicule ou dans un bouton de verrouillage de l'installation de fermeture, est commandé par au moins un contact de commutation, actionné lorsque le système d'alarme est prêt à fonctionner ou lorsque la portière du véhicule est verrouillée, caractérisé en ce que l'élément d'indication (35) opto-électronique délivre des signaux par l'intermédiaire d'un bouton de verrouillage (36) de l'installation de fermeture, réalisé au moins en partie dans une matière transparente, ce bouton de verrouillage (36), lorsque la portière du véhicule est fermée ou lorsqu'il est enfoncé, recevant un faisceau lumineux, de l'élément d'indication (35) opto-électronique, placé dans la cavité de la portière du véhicule, lequel faisceau dirigé radialement, est dévié dans le bouton de verrouillage (36) dans une direction axiale, orientée vers la face supérieure du bouton de verrouillage, le bouton de verrouillage (35) étant en deux parties et présentant une partie transparente (37) et une partie filetée (38) qui sont clipsées entre elles et qui sont bloquées en rotation au moyen d'un ergot (40), formé sur la partie transparente (37), au droit d'un creux (41) correspondant pratiqué dans la partie filetée.

8. Dispositif selon la revendication 7, caractérisé en ce que la déviation du faisceau lumineux s'effectue au moyen d'un prisme monté dans le bouton de verrouillage.

9. Dispositif selon la revendication 7, caractérisé en ce que pour dévier le faisceau lumineux, la partie transparente (37) du bouton de verrouillage est pourvue d'un évidement conique à son extrémité opposés à la face supérieure du bouton de verrouillage.

10. Dispositif selon la revendication 9, caractérisé on ce que la surface conique (43) est rendue réfléchissante.
